# EUROPÄISCHE PATENTANMELDUNG

(11) **EP 0 525 797 A2**
(43) Veröffentlichungstag der Anmeldung: **03.02.1993**
(21) Anmeldenummer: 92113098.5
(22) Anmeldetag: 31.07.1992
(51) Int. Cl.: C08G 8/08, C08G 8/18, D06P 1/56

(54) **Sulfonsäuregruppenhaltige Mischkondensate, Verfahren zu ihrer Herstellung und ihre Verwendung**

(30) Priorität: 01.08.1991 DE 4125458
(71) Anmelder: HOECHST AKTIENGESELLSCHAFT, D-65926 Frankfurt am Main (DE)
(72) Erfinder: Schwab, Wolfgang, Dr., W-6092 Kelsterbach (DE); Uhrig, Heinz, W-6374 Steinbach/Taunus (DE); Dietz, Erwin, Dr., W-6233 Kelkheim/Taunus (DE); Schnaitmann, Dieter, Dr., W-6239 Eppstein/Taunus (DE)

(57) **Zusammenfassung**

Mischkondensationsproduke sowie ihre Alkanolammoniumsalze aus sulfonierten aromatischen Verbindungen und/oder Novolaken mit Aldehyden eignen sich als Dispergiermittel für die Herstellung von Farbmitteldispersionen, als Kupplungshilfsmittel für die Herstellung von Azofarbmitteln, als Färbereihilfs- und Stabilisierungsmittel für elektrolythaltige Färbeflotten sowie als Emulgiermittel für die Herstellung von Carrieremulsionen. Pigmentzubereitungen, bestehend im wesentlichen aus einem organischen Pigment und mindestens einem erfindungsgemäßen Mischkondensat eignen sich besonders für die Herstellung von wasserverdünnbaren Automobillacken.

## Beschreibung

Die Erfindung betrifft grenzflächenaktive Mittel, die als Dispergiermittel für die Herstellung von Farbmitteldispersionen eingesetzt werden.

Bei der Herstellung von Dispersionen und Präparationen von Farbmitteln, beispielsweise Azopigmenten, Dispersionsfarbstoffen und leichtlöslichen Textilfarbstoffen, wird zum Färben von natürlichen und synthetischen Fasermaterialien sowohl in wäßrigen als auch in organischen Medien eine Vielzahl nichtionogener oder kationaktiver, meist aber anionaktiver Tenside benutzt.

In der US-PS 4,322,372 sowie der US-PS 4,295,852 und der US-PS 4,563,190 werden sulfonierte Novolakharze als Dispergiermittel für das Färben von Polyamidfasern mit Säure- und Komplexfarbstoffen beschrieben.

In der US-PS 4,125,410 sind wasserlösliche Novolaksulfonate als Reservierungsmittel zum Färben von Cellulose und als Zusatzmittel für die Herstellung von Zement beschrieben.

In den US-PS 4,202,838, US-PS 4,322,372, US-PS 4,264,323, US-PS 4,214,872 und der US-PS 3,743,619 sind sulfonsäuregruppenhaltige Kondensationsprodukte beschrieben, die man für die Herstellung von lager- und färbestabilen Dispersionen von Farbstoffen, Pigmenten und optischen Aufhellern einsetzt sowie als Färbereihilfsmittel und Dispergiermittel für Phenolharze verwendet.

Durch die grenzflächenaktiven Einflüsse solcher Tensidverbindungen werden oftmals die färberischen Eigenschaften in den jeweiligen Anwendungsbereichen beeinflußt.

Die ständig zunehmenden Anforderungen an Dispergier-, Emulgier- und Praparationsmittel, insbesondere für die Formulierung von Pigmenten, machte die Herstellung neuer grenzflächenaktiver Verbindungen notwendig. Insbesondere durch Inkrafttreten gesetzlicher Auflagen im Sinne der Emissionsreduzierung auf dem Gebiet der Automobillackierung sind die Lackhersteller gehalten, die lösungsmittelhaltigen Lacksysteme auf wasserverdünnbare Basislacke umzustellen. Dies setzt voraus, daß die hierfür benötigten Farbpigmente in ihrer Zubereitung den neuen Bedingungen angepaßt werden, was speziell geeignete Dispergier-und Präparationsmittel erfordert.

Der vorliegenden Erfindung liegt die Aufgabe zugrunde, neue grenzflächenaktive Verbindungen zur Verfügung zu stellen, die den von der Lackindustrie geforderten Eigenschaften gerecht werden.

Es wurde gefunden, daß Verbindungen auf der Basis von Mischkondensationsprodukten aus sulfonierten aromatischen Verbindungen und Aldehyden sich gegenüber den Verbindungen vom Stand der Technik durch stark verbesserte physikalische und chemische Eigenschaften auf dem grenzflächenaktiven Gebiet für die Präparierung von Farbmitteln für spezielle Anwendungsbereiche auszeichnen.

Gegenstand der Erfindung sind Verbindungen der Formel I 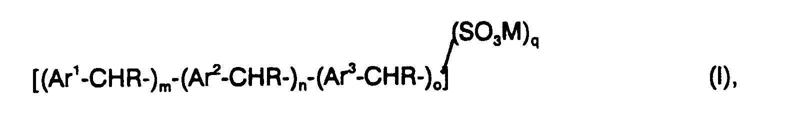
in der
Ar¹ für den Rest eines Alkylphenols mit 1 bis 12, vorzugsweise 1 bis 5, Kohlenstoffatomen im Alkylrest, eines Bis-hydroxyphenyl-Cᵢ-C₄-alkans, eines Hydroxyphenylalkylketons mit 1 bis 5, vorzugsweise 1 bis 3, Kohlenstoffatomen im Alkylrest, eines 2- bis 6-kernigen Cₗ-C₅-Alkylphenyl-novolaks, eines 2- bis 6-kernigen Styrolphenyl-novolaks, eines 2- bis 6-kernigen Methylstyrolphenyl-novolaks oder für eine Kombination daraus steht;
Ar² für den Rest eines Alkylnaphthols mit 1 bis 14, vorzugsweise 8 bis 9, Kohlenstoffatomen im Alkylrest, eines 2- bis 3-kernigen Naphthol-alkanal-novolaks mit 1 bis 9 Kohlenstoffatomen im Alkanalrest oder für eine Kombination daraus steht;
Ar³ für den Rest eines Alkylnaphthalins mit 2 bis 3 Alkylresten, die jeweils 1 bis 9, vorzugsweise 1 bis 4, Kohlenstoffatome enthalten, steht;
R für Wasserstoff oder für einen Alkylrest mit 1 bis 9, vorzugsweise 1 bis 4, Kohlenstoffatomen steht;
m eine ganze Zahl von 1 bis 6, vorzugsweise 1 bis 4, bedeutet;
n eine ganze Zahl von Null bis 4, vorzugsweise Null bis 2, bedeutet;
o eine ganze Zahl von 1 bis 4, vorzugsweise 1 bis 3, insbesondere 2, bedeutet,

mit der Maßgabe, daß die Verbindung der Formel I zwischen 20 Mol-% und 80 Mol-%, vorzugsweise zwischen 33 Mol-% und 67 Mol-%, der Komponente Ar¹ enthält;
q eine Zahl von 3 bis 14, vorzugsweise von 4 bis 12, insbesondere von 5 bis 10, bedeutet und
M für Wasserstoff oder für ein Kation steht.

Unter "Rest" wird jeweils die Stammverbindung abzüglich mindestens eines Wasserstoffatoms verstanden.

Bevorzugt sind Verbindungen der Formel I, in der
Ar¹ für den Rest eines Alkylphenols mit 1 bis 5 Kohlenstoffatomen im Alkylrest, vorzugsweise eines Kresols, insbesondere p-Kresol, oder eines 2- bis 6-kernigen Kresol-novolaks steht.

Weiterhin bevorzugt sind Verbindungen der Formel I, in der
Ar² für den Rest eines Alkyl-ß-naphthols mit 8 bis 9 Kohlenstoffatomen im Alkylrest, eines 2- bis 3- kernigen a-Naphthol-alkanal-novolaks oder eines 2-bis 3-kernigen β-Naphthol-alkanal-novolaks mit jeweils 4 bis 9 Kohlenstoffatomen im Alkanalrest steht.

Von besonderem Interesse sind Verbindungen der Formel I, in der
Ar³ für den Rest eines Dimethylnaphthalins steht. Von besonderem Interesse sind ferner Verbindungen der Formel I, in der
R für Wasserstoff steht. Von besonderem Interesse sind weiterhin Verbindungen der Formel I, in der
M für ein Alkalimetall, vorzugsweise Natrium, für ein Äquivalent eines Erdalkalimetalls, für eine unsubstituierte Ammoniumgruppe, für eine Ammoniumgruppe, die durch 1 bis 4 C₁-Cs-Alkylreste, 1 bis 4 Hydroxy-C₁-C₅-alkylreste oder durch eine Kombination davon substituiert ist, oder für eine durch Anlagerung von 1 bis 150, vorzugsweise 5 bis 30, Ethylenoxid- oder Propylenoxid-Einheiten oder einer Kombination davon an Ammoniak oder an C₁-C₅-Alkylamine, C₂-Cs-Alkylendiamine, C₂-Cₛ-Alkylenpolyamine oder AminoC₂-C₃-alkyl-imidazole entstandene Ammoniumgruppe steht.

Besonders bevorzugt sind Verbindungen der Formel I, in der die Gruppen
Ar¹ einen Rest eines Alkylphenols mit 1 bis 5 Kohlenstoffatomen im Alkylrest oder einen 2- bis 6- kernigen Kresol-novolak oder eine Kombination dieser Reste;
Ar³ einen Rest eines Alkylnaphthalins mit 2 bis 3 Alkylresten, die jeweils 1 bis 4 Kohlenstoffatome enthalten, und;
R Wasserstoff bedeuten;
M die vorstehend genannten Bedeutungen hat;
m eine ganze Zahl von 1 bis 4;
n gleich Null
o gleich 2 und
q eine Zahl von 4 bis 12 bedeuten.

Die dem Rest Ar¹ zugrundeliegenden Verbindungen sind beispielsweise Rohkresole, p- und m-Kresol, p-sekundär- und p-tertiär-Butylphenol, n- und iso-Octylphenol, n- und iso-Nonylphenol, (4.4'-Dihydroxydiphenyl)methan, 2.2(4.4'-Dihydroxydiphenyl)propan, 4-Hydroxyacetophenon sowie Novolakharze, die man aus Rohkresol, m-Kresol, p-Kresol, 4-Ethylphenol, 4-Isopropylphenol, 4-tertiär-Butylphenol, 4-Amylphenol, Styrolphenol, 2-, 3- und 4-Methylstyrolphenol, 4-Hydroxyacetophenon oder deren Gemischen enthält. Unter "Rohkresolen" werden übliche Handelsprodukte verstanden, die im wesentlichen aus einer Mischung von ortho-, meta- und para-Kresol bestehen.

Die dem Rest Ar² zugrundeliegenden Verbindungen sind beispielsweise n- und iso-Octyl-a-naphthol, n-und iso-Octyl-ß-naphthol, n- und iso-nonyl-a-naphthol, n- und iso-nonyl-ß-naphthol sowie Novolakharze, die man aus n-Octyl- oder iso-Octyl-a-naphthol, n-Octyl- oder iso-Octyl-ß-naphthol, n-Nonyl- oder iso-Nonyl-a-naphthol, n-Nonyl oder iso-Nonyl-ß-naphthol, a- und ß-Naphthol oder deren Gemischen erhält.

Die dem Rest Ar³ zugrundeliegenden Verbindungen sind beispielsweise Dimethylnaphthalin, Dipropylnaphthalin, insbesondere Diisopropylnaphthalin, Dinonylnaphthalin sowie Alkylierungsprodukte, die man durch Mono- oder Dialkylierung von Alkylnaphthalin oder Dialkylierung von Naphthalin während der Suffonierung mit einwertigen Alkoholen, beispielsweise n-Propanol, iso-Propanol, n-Butanol, iso-Butanol, n-Amylalkohol und iso-Amylalkohol, gewinnen kann. Vorzugsweise ist bei dialkylierten Naphthalinen jeder der beiden Benzolkerne mit einem Alkylrest substituiert. Es können auch Mischungen isomerer Di- oder Trialkylnaphthaline vorliegen.

Gegenstand der vorliegenden Erfindung ist auch ein Verfahren zur Herstellung einer Verbindung der Formel I. Die erfindungsgemäßen sulfonierten Mischkondensate der Formel I werden erhalten, indem man
a) die den Resten Ar¹, Ar² und Ar³ zugrundeliegenden aromatischen Verbindungen oder deren Gemische mit 0,5 bis 2 Mol, vorzugsweise 1,1 bis 1,4 Mol, Chlorsulfonsäure oder mit 0,5 bis 2 Mol, vorzugsweise 0,9 bis 1,2 Mol, konzentrierter Schwefelsäure pro Mol aromatischen Kerns bei einer Temperatur von 60 ° C bis 180 ° C umsetzt,
b) die dabei entstandenen Mischsulfonsäuren mit 0,4 bis 2 Mol, vorzugsweise 0,5 bis 1 Mol, mindestens eines Alkanals oder einer alkanalabgebenden Verbindung pro Mol Mischsuffonsäure zu einem suffonsauren Mischkondensat der Formel I, wobei M Wasserstoff bedeutet, umsetzt und
c) vorzugsweise das sulfonsaure Mischkondensat mit einer dem Kation M zugrundeliegenden Base neutralisiert.

Im Reaktionsschritt a) findet eine Sulfonierung der aromatischen Kerne Ar^{l}, Ar² und Ar³ der entsprechenden Ausgangsverbindungen statt. Die dabei entstehende Mischung an Arylsuffonsäuren und Arylnovolaksulfonsäuren wird kurz Mischsulfonsäure genannt.

Die Sulfonierung der genannten Ausgangsverbindungen kann nach üblichen Verfahren mit üblichen Sulfonierungsmitteln wie konzentrierter Schwefelsäure, Oleum oder Chlorsulfonsäure, vorzugsweise jedoch mit Schwefelsäuremonohydrat erfolgen. Zur Einführung der Sulfonsäuregruppen werden pro Mol aromatischen Kerns 0,5 bis 2 Mol, vorzugsweise 0,9 bis 1,2 Mol, wasserfreie Schwefelsäure bzw. 0,5 bis 2 Mol, vorzugsweise 1,1 bis 1,4 Mol, Chlorsulfonsäure eingesetzt. Nach Zuführung der Schwefelsäure wird üblicherweise 2 bis 6, vorzugsweise 2 bis 3, Stunden bei einer Temperatur von 60°C bis 180°C, vorzugsweise bei 100°C bis 160°C, gerührt. Während der Rührzeit wird das Reaktionswasser unter Vakuum abdestilliert. Bei Verwendung von Chlorsulfonsäure erfolgt die Sulfonierung bei einer Temperatur von 0°C bis 100°C, vorzugsweise bei 50 °C bis 80 °C, zweckmäßigerweise in Gegenwart von Lösungsmitteln, beispielsweise Chloroform, Trichlorethylen, Trichlorethan oder Dioxan, bei 0°C bis 50 C, bevorzugt jedoch bei 0°C bis 20 °C.

Wird zusätzlich zu dem Sulfonierungsmittel noch ein einwertiger Alkohol der Reaktionsmischung zugegeben, so erfolgt neben der Sulfonierung noch eine Alkylierung der aromatischen Kerne.
b) Die im Reaktionsschritt a) entstandenen Mischsulfonsäuren werden zweckmäßigerweise mit Wasser verdünnt und durch Zugabe mindestens eines Aldehyds, beispielsweise Formaldehyd, Acetaldehyd, Propionaldehyd, n-Butyraldehyd, vorzugsweise jedoch Formaldehyd oder Formaldehyd abgebende Verbindungen, wie Paraformaldehyd, Trioxan, Tetraoxymethylen oder Paraldehyd, kondensiert. Dabei werden pro Mol Mischsulfonsäure 0,4 bis 2,0 Mol, vorzugsweise 0,5 bis 1,0 Mol, Aldehyd eingesetzt. Die Kondensation der Mischsulfonsäuren mit dem jeweiligen Aldehyd kann nach üblichen Methoden (Houben-Weyl, Methoden der organischen Chemie, Band 14 11, Seite 266 - 267, 1963) bei Temperaturen von 50 °C bis 110°C, bevorzugt jedoch bei 80 °C bis 90 °C, erfolgen, bis die Reaktionsmischung nach normalerweise 15 bis 30 Stunden aldehydfrei ist.
c) Das auf diese Weise hergestellte sulfonierte Mischkondensat der Formel 1 wird zur Bildung der Neutralsalze mit Alkalihydroxiden, Erdalkalihydroxiden oder Ammoniumhydroxid, vor allem aber mit Alkylaminen, Alkylolaminen oder oxalkylierten Alkylaminen oder oxalkylierten Alkylolaminen bis zum Neutralpunkt umgesetzt. Folgende Alkylolamine sind geeignet: Monoethanolamin, Diethanolamin, Dimethylethanolamin, Diethylethanolamin und N,N-(Aminoethyl)-ethanolamin.

Alkylenoxidaddukte, die durch Anlagerung von 1 bis 150 Mol, vorzugsweise 2 bis 30 Mol, Ethylenoxid oder einer Mischung aus Ethylenoxid und Propylenoxid an niedermolekulare Alkylamine oder Alkylolamine erhalten werden, können in den Verbindungen der Formel I den Grad der Hydrophilie zusätzlich beeinflussen. Folgende Alkylamine und Alkylolamine sind dafür geeignet: Ethylamin, Propylamin, Isopropylamin, n-Butylamin, Isobutylamin, Monoethanolamin, Monopropanolamin, Monoisopropanolamin, Monobutanolamin, Monoisobutanolamin, Diethanolamin, Dipropanolamin, Dibutanolamin, Dimethylethanolamin, Triethanolamin, Tripropanolamin oder Tributanolamin sowie Di- und Polyamine wie Ethylendiamin, Diethylentriamin, Triethylentetramin, Propylendiamin, Dipropylentriamin, Tripropylentetramin, Dimethylaminopropylamin, Diethylaminopropylamin sowie aminoalkylsubstituierte Imidazole, beispielsweise Aminoethylimidazol oder Aminopropylimidazol.

Die Herstellung der den Resten Ar¹ und Ar² zugrundeliegenden Novolake kann nach herkömmlichen Methoden, wie sie beispielsweise in Houben-Weyl, Organische Chemie, Band 14/11, der DE-A-2132405 und EP-A-0065751 beschrieben sind, durch Kondensation mit einem Aldehyd, beispielsweise Acetaldehyd, Propionaldehyd, Butyraldehyd, Isobutyraldehyd, Önanthaldehyd, Laurinaldehyd, Octylaldehyd oder Nonylaldehyd, vorzugsweise jedoch mit Formaldehyd oder mit Formaldehyd abgebenden Verbindungen wie Paraformaldehyd, Trioxan oder Tetraoxymethylen erfolgen. Hierbei verhalten sich die molaren Mengen von Alkylphenol bzw. Alkylnaphthol zu jeweiligem Alkanal wie 2:1 bis 10:9, vorzugsweise 2:1 bis 5:4.

Als Katalysatoren für die Kondensationsreaktion zur Herstellung der Novolake können Mineralsäuren wie Schwefelsäure, Phosphorsäure sowie Sulfonsäuren wie Dodecylbenzolsulfonsäure oder bevorzugt Salzsäure in einer Konzentration von 0,1 bis 5 Gew.-% verwendet werden.

Die Kondensationsreaktion wird bei Temperaturen von 20 °C bis 180°C, bevorzugt 80 °C bis 150°C, unter Stickstoff durchgeführt. Anschließend wird vorhandenes Wasser abdestilliert, zweckmäßigerweise unter vermindertem Druck, bis der Wassergehalt im Harz weniger als 0,3 Gew.-% beträgt.

Die erfindungsgemäßen sulfonsäuregruppenhaltigen Mischkondensate liegen in der Regel in Form einer Mischung sämtlicher sequenzisomerer Verbindungen der Formel 1 vor, da bei der Kondensation der Aryleinheiten Ar^{l}, Ar² und Ar³ mit dem Aldehyd im Prinzip jede Kombination in der Sequenz der Struktureinheiten Ar^{l-}CHR, Ar²⁻CHR und Ar³⁻CHR entstehen kann.

Es wurde gefunden, daß die anwendungstechnischen Eigenschaften wesentlich vom Molverhältnis der genannten Arylkomponenten abhängen. Die gewünschten coloristischen und rheologischen Eigenschaften bezüglich Farbstärke, Glanz, Fließfähigkeit und Stabilität werden erhalten, wenn die Verbindung der Formel I zwischen 20 Mol-% und 80 Mol-%, vorzugsweise zwischen 33 Mol-% und 67 Mol-%, der Arylkomponente Ar¹ enthält, wobei Ar¹ in einer besonders bevorzugten Ausführungsform ein Rest des p-Kresols oder eines 2- bis 6-kernigen p-Kresol-novolaks ist.

Die erfindungsgemäßen Verbindungen der Formel I und deren Gemische sind in Wasser klar löslich oder wasseremulgierend und zeigen nach dem Ross-Miles Test (DIN 53 902) nur eine geringe Schaumneigung bei gleichzeitiger Herabsetzung der Oberflächenspannung nach der Ringabreißmethode (DIN 53 914) im Bereich von 45810-3 bis 54810-3 N/m. Durch die Herabsetzung der Oberflächenspannung bis zu höchstens 45810-3 N/m besitzen diese Verbindungen jedoch keine oder nur geringe Netzwirkung für Baumwollgewebe nach der Tauchnetzmethode (DIN 53 901), demgegenüber sind sie jedoch gegen anorganische Salze in wäßrigen Systemen unter üblichen Anwendungsbedingungen von Tensiden beständig.

Die Erfindung betrifft ferner die Verwendung der erfindungsgemäßen Verbindungen als Dispergier-, Emulgier- und Verteilungsmittel, beispielsweise für die Herstellung hochpigmentierter und gut fließfähiger Pigmentzubereitungen sowie für Pigmentzubereitungen anorganischer und organischer Pigmente, insbesondere organischer Pigmente wie beispielsweise Azopigmente, Chinacridone, Phthalocyaninpigmente, Flavanthron-, Anthanthron- und Pyranthronkörper, Derivate der Naphthalintetracarbonsäure und der Perylentetracarbonsäure, des Thioindigos, des Dioxazins, der Tetrachlorisoindolinone, weiterhin für verlackte Pigmente wie die Magnesium-, Calcium-, Barium-, Aluminium-, Mangan- und Nickellacke von säuregruppenhaltigen Farbstoffen. Bevorzugt eignen sich die erfindungsgemäßen Verbindungen für die Herstellung von Pigmentzubereitungen polycyclischer Pigmente, besonders bevorzugt von Perylenpigmenten. Ferner eignen sich die erfindungsgemäßen Verbindungen für die Herstellung von Farbstoffdispersionen von Dispersionsfarbstoffen, für die Formulierung von Pflanzenschutz- und Schädlingsbekämpfungsmitteln, weiterhin als Färbereihilfs- und Stabilisierungsmittel zum Färben von natürlichen und synthetischen Fasermaterialien in elektrolythaltigen Färbeflotten sowie weiterhin als Emulgiermittel für die Herstellung von Carrieremulsionen, insbesondere von Chlorbenzolen, Chlorphenolen, Hydroxrydiphenylen, Diphenyl, Phenylphenolen, aromatischen Carbonsäureestern und Alkoholen sowie Naphthalin und dessen Derivaten.

Die Überlegenheit der erfindungsgemäßen Substanzen der allgemeinen Formel I gegenüber den bekannten anionischen Dispergiermitteln wie Ligninsulfonaten oder Formaldehydkondensationsprodukten auf der Basis von Naphthalinsulfonsäure, Alkylnaphthalinsulfonsäure, Phenolsulfonsäure und Novolaksulfonsäuren sowie Kresol-Formaldehyd oder Phenyl-Formaldehyd und Natriumsulfit, besteht darin, daß das Emulgier- und Dispergierverhalten so weit verbessert ist, daß die Präparierung von organischen Pigmenten, besonders von polycyclischen Verbindungen, für die Anwendung in wäßrigen und organischen Medien nunmehr möglich ist. Die Verbesserungen betreffen insbesondere die Feinverteilung und damit verbunden auch die Farbstärke und den Glanz sowie die Fließfähigkeit bei gleichzeitig guter Stabilität der hergestellten Pigmentpräparationen.

Die erfindungsgemäßen Verbindungen können einzeln oder als Gemische sowie in Kombination mit anderen nichtionogenen, anionischen oder gegebenenfalls kationischen Tensiden oder Gemischen davon eingesetzt werden. Weiterhin können sie zusammen mit Gerüstsubstanzen oder anderen üblichen Zusätzen oder Hilfsstoffen zur Anwendung kommen.

Gegenstand der vorliegenden Erfindung sind auch Pigmentzubereitungen, die im wesentlichen aus
a) 99,5 bis 50 Gew.-%, vorzugsweise 97 bis 70 Gew.-%, mindestens eines organischen Pigments,
b) 0,5 bis 30 Gew.-%, vorzugsweise 1 bis 20 Gew.-%, mindestens einer Verbindung der Formel (I) und
c) 0 bis 20 Gew.-%, vorzugsweise 2 bis 10 Gew.-%, an weiteren üblichen Zinsatzstoffen bestehen, wobei die Anteile der Bestandteile b) und c) auf das Gewicht des Pigmentes oder der Pigmente bezogen sind.

Zur Herstellung dieser Pigmentzubereitungen wird die Oberfläche der Pigmente mit einer oder mehreren der erfindungsgemäßen Verbindungen beschichtet. Es gibt eine Reihe von Möglichkeiten, die erfindungsgemäßen Verbindungen auf die Pigmentoberfläche aufzubringen. Es kann dieses während oder nach der Pigmentsynthese, bei einem Finishprozeß oder bei der Einarbeitung des Pigmentes in das Anwendungsmedium erfolgen. Bevorzugt ist die Oberflächenbelegung während der Pigmentsynthese oder bei einem Finishprozeß. Das Aufbringen der erfindungsgemäßen Verbindungen der Formel (I) auf die Pigmentteilchen kann in wäßriger Suspension, in Wasser-Lösungsmittelgemischen oder in organischen Lösungsmitteln erfolgen. Die Zugabe der Verbindungen der Formel (I) kann auch bei der Einarbeitung der Pigmente ins Anwendungsmedium erfolgen. Beim Aufbringen der erfindungsgemäßen Verbindungen auf die Pigmentoberfläche in wäßriger Suspension oder in Wasser-Lösungsmittelgemischen wird das Pigment anschließend normalerweise durch Filtration isoliert. In der Regel hat dabei der pH-Wert einen Einfluß auf die Pigmenteigenschaften. Bevorzugt ist ein pH-Wert von 6,5 bis 12, insbesondere von 7,5 bis 9.

Gegenstand der Erfindung ist weiterhin die Verwendung der erfindungsgemäßen Pigmentzubereitungen zum Pigmentieren und Färben natürlicher und synthetischer Materialien. Bevorzugt ist die Verwendung bei der Herstellung von wäßrigen Dispersions- und Druckfarben sowie von Lacken. Besonders bevorzugt ist die Verwendung zum Pigmentieren wäßriger Lacksysteme, insbesondere für die Automobil-Serienlackierung.

Die erfindungsgemäßen Pigmentzubereitungen zeigen in wäßrigen Polyacrylat-, Polyester- und Polyurethansystemen einwandfreie rheologische Eigenschaften bei gleichzeitiger positiver Beeinflussung der coloristischen Eigenschaften, wie beispielsweise Transparenz bei Vollton- und Metallic-Lackierungen.

In den folgenden Beispielen beziehen sich "Teile" (TI.) und Prozentangaben auf das Gewicht, Gewichtsteile verhalten sich zu Volumenteilen wie Kilogramm zu Liter. Der Sulfonierungsgrad gibt an, wieviel Prozentanteile der aromatischen Ausgangs- und Kondensationsprodukte tatsächlich sulfoniert sind, wobei die Angaben der gebundenen Schwefelsäure, berechnet auf S0₃, nach H.P. Kaufmann, Analysen der Fette und Fettprodukte, 1958, Springer Verlag, erfolgt. Die Bestimmung der Prozentanteile des anionaktiven Schwefels erfolgte nach der Methylenblau-Zweiphasenmethode nach S.R. Epton und entspricht den Deutschen Einheitsmethoden zur Untersuchung von Tensiden und verwandten Stoffen.

### Synthese der Mischkondensate

### Beispiel A

### a) Herstellung einer 3-Kern-p-Kresol-dimethylnaphthalin-Mischsulfonsäure

312 Tl. (2 Mol) Dimethylnaphthalin und 314 Tl. 3-Kern-p-Kresol-novolak (1 Mol) wurden mit 539 Tl. Schwefelsäuremonohydrat innerhalb von 5 Stunden bei 130°C bis 140°C unter Abdestillieren des Reaktionswassers bei ca. 10 bis 20 Millibar bis zur Wasserlöslichkeit sulfoniert. Der Sulfonierungsgrad entsprach ca. 94 %.

### b) Herstellung eines 5-Kern-p-Kresol-dimethylnaphthalinsulfonsauren Formaldehydkondensates

300 Tl. Mischsulfonsäure a) wurden nach Abkühlen auf 60 °C bis 70 °C mit 240 Tl. Wasser durch langsame Zugabe verdünnt und bei gleicher Temperatur innerhalb von 30 bis 45 Minuten mit 52 Tl. (2,2 Mol) Formaldehyd (36 %ig) versetzt. Anschließend wurde 16 Stunden bei 80 ° C kondensiert.

### c) Herstellung des Natriumsalzes

213 Tl. sulfonsaures Formaldehydkondensat b) wurden bei einer Temperatur von 20 °C bis 30 °C mit 138,6 Tl. Natronlauge (33 %ig) auf pH 6,8 bis 7,0 neutralisiert und nach Einstellung mit Wasser auf 30 Gew.-% Trockengehalt sprühgetrocknet. Man erhielt 320 Tl. eines gelbgefärbten Pulvers mit 5,5 Gew.-% anionaktiv gebundenem Schwefel.

### d) Herstellung eines Triethanolamin-Salzes

213,6 Tl. sulfonsaures Formaldehydkondensat b) wurden bei einer Temperatur von 20 °C bis 30 °C mit 170,3 Tl. Triethanolamin unter Zugabe von Wasser auf pH 7,0 bis 7,2 neutralisiert. Die Menge des zugesetzten Wassers betrug zwischen 50 und 75 % der hergestellten Lösung. Die Wirksubstanz enthält 4,2 % anionaktiv gebundenen Schwefel.

### e) Herstellung eines N,N-Dimethylethanolamin-Salzes

213,6 Tl. sulfonsaures Formaldehydkondensat b) wurden analog d) mit 99,4 Tl. N,N-Dimethylethanolamin neutralisiert und auf einen Wassergehaltvon 50 bis 75 % verdünnt. Die Wirksubstanz enthält 4,5 % anionaktiv gebundenen Schwefel.

### f) Herstellung eines Triethanolamin-oxethylat-Salzes

150 Tl. sulfonsaures Formaldehydkondensat b) wurden bei 20 °C bis 30 °C mit 297 Tl. Triethanolamin und 18 Mol Ethylenoxid unter gleichzeitiger Zugabe von Wasser auf pH 7,2 bis 7,3 eingestellt. Der Wassergehalt der Lösung betrug am Ende zwischen 50 und 75 %. Auf wirksame Substanz bezogen, beträgt der anionaktiv gebundene Schwefel 2,0 %.

### g) Herstellung eines N-(2-Aminoethyl-)ethanolamin-oxethylatsalzes

150 Tl. sulfonsaures Formaldehydkondensat b) wurden analog f) mit 284 Tl. N-(2-Aminoethyl- )ethanolamin und 18 Mol Ethylenoxid bei gleichzeitiger Zugabe von Wasser auf pH 7,1 bis 7,2 eingestellt. Der Tensidschwefelgehalt beträgt 1,8 %.

### h) Herstellung eines Aminopropylimidazol-oxethylat-Salzes

150 Tl. sulfonsaures Formaldehydkondensat b) wurden analog f) mit 292 Tl. Aminopropylimidazol und 18 Mol Ethylenoxid bei gleichzeitiger Zugabe von Wasser auf pH 7,1 bis 7,3 eingestellt. Der Gehalt an anionaktiv gebundenem Schwefel beträgt 1,75 %.

### Beispiel B

### a) Herstellung einer p-Kresol-dimethylnaphthalin-Mischsulfonsäure

312 Tl. (2 Mol) Dimethylnaphthalin und 208 Tl. (2 Mol) p-Kresol wurden analog Beispiel Aa) mit 422,4 Tl. (4,4 Mol) Schwefelsäuremonohydrat unter Abdestillieren des Reaktionswassers bis zur Wasserlöslichkeit sulfoniert. Der Sulfonierungsgrad beträgt ca. 83 %.

### b) Herstellung eines 4-Kern-p-Kresol-dimethylnaphthalinsulfonsauren Formaldehydkondensates

250 Tl. Mischsulfonsäure a) wurden nach Abkühlen auf 60 °C bis 70 °C und nach Verdünnen mit 200 Tl. Wasser entsprechend Beispiel Ab) mit 75,7 Tl. (3,3 Mol) Formaldehyd (36 %ig) bei 80 °C in 16 Stunden kondensiert.

### c) Herstellung des Natriumsalzes

200 Tl. sulfonsaures Formaldehydkondensat b) wurden analog Beispiel Ac) bei einer Temperatur von 20 °C bis 30 °C mit 124,0 Tl. Natronlauge (33 %ig) auf pH 7,0 neutralisiert und sprühgetrocknet. Man erhielt 120 Tl. eines gelbgefärbten Pulvers, dessen Gehalt an anionaktiv gebundenem Schwefel 5,9 % beträgt.

### d) Herstellung eines N,N-Dimethylethanolamin-Salzes

200 Tl. sulfonsaures Formaldehydkondensat b) wurden entsprechend Beispiel Ae) mit 89 Tl. N,N-Dimethylethanolamin bei einer Temperatur von 20 °C bis 30 °C auf pH 7,1 bis 7,3 neutralisiert und mit Wasser auf einen Feststoffgehalt zwischen 25 und 50 % eingestellt. Der Gehalt des anionaktiv gebundenen Schwefels beträgt 3,2 %.

### Beispiel C

### a) Herstellung einer p-Kresol-dimethylnaphthalin-Mischsulfonsäure

312 Tl. (2 Mol) Dimethylnaphthalin und 416 Tl. (4 Mol) p-Kresol wurden gemäß Beispiel Aa) mit 646,8 Tl. (6,6 Mol) Schwefelsäuremonohydrat unter gleichzeitigem Abdestillieren des Reaktionswassers bei 130 °C bis 150 °C bis zur Wasserlöslichkeit sulfoniert. Der erhaltene Sulfonierungsgrad liegt bei 75 %.

### b) Herstellung eines 6-Kern-p-Kresol-dimethylnaphthalinsulfonsauren Formaldehydkondensates

400 TI. Mischsulfonsäure a) wurden nach Abkühlen auf 60 °C bis 70 °C mit 300 TI. Wasser verdünnt und wie bei Beispiel Ab) mit 140,5 TI (6,6 Mol) Formaldehyd (36 %ig) bei 80°C in 20 Stunden kondensiert.

### c) Herstellung des Natriumsalzes

250 Tl. sulfonsaures Formaldehydkondensat b) wurden bei 20 °C bis 30 °C analog Beispiel Ac) mit 67,9 Tl. Natronlauge (33 %ig) auf pH 7,0 neutralisiert und sprühgetrocknet. Man erhielt 130 Tl. eines gelbgefärbten Pulvers mit 5,5 % anionaktiv gebundenem Schwefel.

### d) Herstellung eines N,N-Dimethylethanolamin-Salzes

250 Tl. sulfonsaures Formaldehydkondensat b) wurden bei 20 °C bis 30 °C entsprechend Ac) mit 52,5 Tl. N,N-Dimethylethanolamin auf pH 7,1 bis 7,3 eingestellt und auf einen Wassergehalt zwischen 50 und 75 % verdünnt. Der Gehalt an anionaktiv gebundenem Schwefel beträgt 5,1 %.

### e) Herstellung eines Triethanolamin-N-(2-Aminoethyl)-ethanolamin-Mischsalzes

250 Tl. sulfonsaures Formaldehydkondensat b) wurden bei 20 °C bis 30 °C gemäß Beispiel Ac) mit 44 Tl. Triethanolamin und 31 Tl. N-(2-Aminoethyl)-ethanolamin auf pH 7,1 bis 7,3 neutralisiert und auf einen Wassergehalt zwischen 50 und 75 % eingestellt. Der Gehalt an anionaktiv gebundenem Schwefel beträgt 4,5 %.

### Beispiel D

### a) Herstellung einer 2-Kern-β-naphthol-octanal-novolak-p-kresol-dimethylnaphthalin-Mischsulfonsäure

400 Tl. (1 Mol) 2-Kern-ß-naphthol-octanal-novolak, 312 Tl. (2 Mol) Dimethylnaphthalin und 416 Tl. (4 Mol) p-Kresol wurden mit 784 Tl. (8,0 Mol) Schwefelsäuremonohydrat in 5 Stunden bei 130°C bis 140 °C unter gleichzeitigem Abdestillieren des Reaktionswassers sulfoniert. Der Sulfonierungsgrad beträgt ca. 85 %.

### b) Herstellung eines 8-Kern-octylen-di-ß-naphthol-dimethylnaphthalin-p-kresol-sulfonsauren Formaldehydkondensates

500 Tl. Mischsulfonsäure a) wurden nach Abkühlen auf 60 °C bis 70 °C mit 450 Tl. Wasser verdünnt und entsprechend Beispiel Ab) mit 138,3 Tl. (2,75 Mol) Formaldehyd (36 %) bei 80 °C in 20 Stunden kondensiert.

### c) Herstellung eines N,N-Dimethylethanolamin-Salzes

250 Tl. sulfonsaures Formaldehydkondensat b) wurden bei 20 °C bis 30 °C nach Beispiel Ae) mit 56,1 Tl. N,N-Dimethylethanolamin auf pH 7,1 bis 7,2 eingestellt, wobei durch Zugabe von Wasser auf einen Feststoffgehalt von 25 bis 50 % verdünnt wurde. Der Gehalt an anionaktiv gebundenem Schwefel beträgt 5,9 %.

### Beispiel E

### a) Herstellung einer Nonyl-ß-naphthol-p-kresol-dimethylnaphthalin-Mischsulfonsäure

540 TI. (2 Mol) Nonyl-ß-naphthol, 416 TI. (4 Mol) p-Kresol und 312 TI. (2 Mol) Dimethylnaphthalin wurden mit 862,4 TI. (8,8 Mol) Schwefelsäuremonohydrat innerhalb von 6 Stunden bei 140°C bis 150 °C unter gleichzeitigem Abdestillieren des Reaktionswassers bei etwa 20 bis 30 Millibar bis zur Wasserlöslichkeit sulfoniert. Der erreichte Sulfonierungsgrad liegt bei 78 %.

### b) Herstellung eines 8-Kern-nonyl-ß-naphthol-p-kresol-dimethylnaphthalinsulfonsauren Formaldehydkondensates

500 TI. Mischsulfonsäure a) wurden nach Abkühlung auf 60 °C bis 70 °C entsprechend Beispiel Ab) nach Zugabe von 450 TI. Wasser und 156 TI. (7,7 Mol) Formaldehyd (36 %ig) in 20 Stunden bei 80 °C kondensiert.

### c) Herstellung des Natriumsalzes

276 Tl. sulfonsaures Formaldehydkondensat b) wurden bei 20 °C bis 30 °C entsprechend Beispiel Ac) mit 64 Tl. Natronlauge (36 %ig) auf pH 6,8 bis 7,0 neutralisiert und sprühgetrocknet. Man erhielt ein gelbbraunes Pulver mit einem Gehalt an Tensidschwefel von 6,5 %.

### d) Herstellung eines N,N-Dimethylethanolamin-Salzes

276 Tl. sulfonsaures Formaldehydkondensat b) wurden bei einer Temperatur entsprechend Beispiel Ae) mit 52 Tl. N,N-Dimethylethanolamin auf pH 7,0 bis 7,2 neutralisiert und dabei mit Wasser auf einen Feststoffgehalt von 25 bis 50 % eingestellt. Der Gehalt an anionaktiv gebundenem Schwefel beträgt 6,2 %.

### e) Herstellung eines N-(2-Aminoethyl-)ethanolamin-Salzes

276 Tl. sulfonsaures Formaldehydkondensat b) wurden gemäß Beispiel Ed) mit 60,8 Tl. N-(2-Aminoethyl-)ethanolamin neutralisiert und gleichzeitig mit Wasser auf einen Feststoffgehalt von 50 bis 75 % verdünnt. Das Produkt enthält 5,9 % anionaktiv gebundenen Schwefel.

### Beispiel F

### a) Herstellung einer Di-n-butyl-monomethylnaphthalin-p-kresol-Mischsulfonsäure

284 Tl. (2 Mol) Monomethylnaphthalin und 148 Tl. (2 Mol) n-Butanol wurden als Gemisch vorgelegt und in 6 Stunden mit 394,4 Tl. Chlorsulfonsäure bei 60°C bis 70°C sulfoniert, wobei gleichzeitig die Dibutylierung des Methylnaphthalins erfolgte. Anschließend wurde die Reaktionstemperatur auf etwa 90 °C gesteigert und 4 Stunden nachgerührt, wobei durch gleichzeitiges Durchleiten von Stickstoff das freiwerdende HCI-Gas entfernt wurde. Nach weiterer Steigerung der Temperatur auf 100°C wurden 312 TI. (3 Mol) p-Kresol zugegeben und mit 147 Tl. (1,5 Mol) Schwefelsäuremonohydrat unter Abdestillieren des Reaktionswassers in 2 Stunden bei 100°C und 2 Stunden bei 130°C bis 140°C bis zur Wasserlöslichkeit sulfoniert. Der erreichte Sulfonierungsgrad beträgt 94 %.

### b) Herstellung eines 5-Kern-di-n-butyl-monomethylnaphthalin-p-kresol-sulfonsauren Formaldehydkondensates

500 Tl. Mischsulfonsäure a) wurden auf 60 °C bis 70 °C abgekühlt und mit 450 Tl. Wasser verdünnt. Nach Zugabe von 188 Tl. (4,4 Mol) Formaldehyd (36 %ig) kondensierte man noch 20 Stunden bei 80 °C.

### c) Herstellung eines Natriumsalzes

300 Tl. sulfonsaures Formaldehydkondensat b) wurden bei 20 °C bis 30 °C mit 126,6 Tl. Natronlauge (33 %ig) auf pH 6,8 bis 7,0 eingestellt und sprühgetrocknet. Man erhielt ein gelbbraunes Pulver mit 4,9 % Tensidschwefel-Gehalt.

### d) Herstellung eines Triethanolamin-Salzes

300 Tl. sulfonsaures Formaldehydkondensat b) wurden bei 20 °C bis 30 °C mit 155,6 Tl. Triethanolamin bei gleichzeitiger Zugabe von Wasser auf pH 7,0 bis 7,2 neutralisiert. Die zugesetzte Menge an Wasser betrug zwischen 50 und 75 %, wobei die wirksame Substanz 4,2 % anionaktiv gebundenen Schwefel enthielt.

### e) Herstellung eines N,N-Dimethylethanolamin-Salzes

300 Tl. sulfonsaures Formaldehydkondensat wurden entsprechend d) mit 92,9 Tl. N,N-Dimethylethanolamin auf pH 7,0 bis 7,2 eingestellt. Der Gehalt an anionaktiv gebundenem Schwefel beträgt 4,4 %.

### f) Herstellung eines N-(2-Aminoethyl-)ethanolamin-Salzes

300 TI. sulfonsaures Formaldehydkondensat wurden entsprechend d) mit 109,6 TI. N-(2-Aminoethyl- )ethanolamin auf pH 7,0 bis 7,2 neutralisiert. Der Gehalt an anioaktiv gebundenem Schwefel entspricht 4,3 %.

### Beispiel G

### a) Herstellung einer 5-Kern-phenolstyrol-novolak-dimethylnaphthalin-Mischsulfonsäure

890 Tl. (1,0 Mol) 5-Kern-phenolstyrol-novolak und 312 Tl. (2 Mol) Dimethylnaphthalin wurden in Methylenchlorid gelöst und mit 407,8 Tl. (7,0 Mol) Chlorsulfonsäure innerhalb von 2 Stunden bei 5°C bis 10°C und anschließend 3 Stunden bei 10°C bis 20°C sulfoniert. Unter langsamer Steigerung der Reaktionstemperatur auf 50 °C wurde das Methylenchlorid unter Vakuum abdestilliert und bei 70 °C solange nachgerührt, bis das Reaktionsgemisch in Wasser klar löslich war. Der Sulfonierungsgrad beträgt 92 %.

### b) Herstellung eines 7-Kern-phenylstyrol-dimethylnaphthalinsulfonsauren Formaldehydkondensates

250 Tl. Mischsulfonsäure a) wurden bei 60 °C bis 70 °C nach Zugabe von 200 Tl. Wasser innerhalb 1 Stunde mit 26 Tl. (1,1 Mol) Formaldehyd (36 %ig) versetzt und 16 Stunden bei 80 °C kondensiert.

### c) Herstellung eines N,N-Dimethylethanolamin-Salzes

250 Tl. sulfonsaures Formaldehydkondensat b) wurden gemäß Beispiel Fc) mit 93 Tl. N,N-Dimethylethanolamin auf pH 7,1 bis 7,2 neutralisiert. Die Menge des zugesetzten Wassers betrug zwischen 50 und 75 %. Der Gehalt an anionaktiv gebundenem Schwefel beträgt 4,5 %.

### Beispiel H

### a) Herstellung einer 2-Kern-p-kresol-nonanal-novolak-dimethylnaphthalin-Mischsulfonsäure

684 Tl. (2 Mol) 2-Kern-p-kresol-nonanal-novolak und 312 TI. (2 Mol) Dimethylnaphthalin wurden analog Beispiel Aa) mit 323,4 Tl. (6,6 Mol) Schwefelsäuremonohydrat innerhalb von 2 Stunden bei 100°C und anschließend 4 Stunden bei 130°C bis 140°C bei gleichzeitigem Abdestillieren des Reaktionswasser bis zur Wasserlöslichkelt sulfoniert. Der erreichte Sulfonierungsgrad liegt bei 81 %.

### b) Herstellung eines 6-Kern-p-kresol-nonanal-di-dimethylnaphthalinsulfonsauren Formaldehydkondensates

250 Tl. Mischsulfonsäure a) wurden auf 60 °C bis 70 °C abgekühlt und mit 200 Tl. Wasser versetzt. Nach Zugabe von 46,2 Tl. (1,8 Mol) Formaldehyd wurde noch 20 Stunden bei 80 °C kondensiert.

### c) Herstellung des N,N-Dimethylethanolaminsalzes

400 Tl. sulfonsaures Formaldehydkondensat b) wurden entsprechend Beispiel Gc) bei 20 °C bis 30 °C mit 95 Tl. N,N-Dimethylethanolamin unter Zugabe von Wasser auf pH 7,1 bis 7,2 eingestellt. Die zugesetzte Menge Wasser betrug zwischen 50 und 75 %. Auf wirksame Substanz bezogen, beträgt der Gehalt an anionaktiv gebundenem Schwefel 3,8 %.

### Beispiel J

### a) Herstellung einer 4-Kern-p-tert-butylphenol-novolak-di-dimethylnaphthalin-Mischsulfonsäure

538 Tl. (1 Mol) 4-Kern-p-tert-butylphenol-novolak und 312 Tl. (2 Mol) Dimethylnaphthalin wurden in Methylenchlorid gelöst und 2 Stunden bei 5°C bis 10°C und weiteren 6 Stunden bei 10°C bis 20 °C sulfoniert. Unter Steigerung der Reaktionstemperatur auf 50 °C wurde das Methylenchlorid unter Vakuum bei 20 bis 30 mbar abdestilliert, und es wurde bis zur Wasserlöslichkeit nachgerührt. Der Sulfonierungsgrad beträgt 74 %.

### b) Herstellung eines 6-Kern-p-tert-butylphenol-novolak-di-dimethylnaphthalinsulfonsauren Formaldehydkondensates

300 Tl. Mischsulfonsäure a) wurden nach Abkühlung auf 60 °C bis 70 °C mit 300 TI. Wasser verdünnt und nach Zugabe von 65 TI. (2,2 Mol) Formaldehyd (36 %ig) 12 Stunden bei 90 °C bis 100°C kondensiert.

### c) Herstellung eines N-(2-Aminoethyl)-ethanolamin-Salzes

500 Tl. sulfonsaures Formaldehydkondensat b) wurden bei 20 ° C bis 30 ° C mit 195 Tl. N-(2-Aminoethyl)-ethanolamin unter gleichzeitger Zugabe von Wasser auf pH 7,1 bis 7,3 eingestellt. Die zugesetzte Wassermenge betrug zwischen 50 und 75 % der Gesamtlösung. Der Gehalt an anionaktiv gebundenem Schwefel beträgt 4,9 %.

### Herstellung und Anwendung der Pigmentzubereitungen und Pigmentdispersionen

Zur Eignungsprüfung wurden die in den vorstehenden Beispielen beschriebenen Verbindungen entweder auf Pigmente aufgebracht, oder sie wurden zur Dispergierung von Pigmenten in wäßrigen Lacksystemen eingesetzt. Als Lacksysteme wurden wäßrige Polyacrylat-, Polyester- und Polyurethansysteme gewählt. An den mit diesen Lacken erstellten Einbrennlackierungen wurden die anwendungstechnischen Eigenschaften, insbesondere die Transparenz geprüft. Zur Begutachtung der coloristischen Kriterien (Farbstärke, Farbton, Transparenz) wurden die verdünnten Volltonlacke entweder mit einem Handcoater (Spiralrakel, 24 um Naßfilmstärke) auf transparente Polyesterfolie oder mit einem Filmziehgerät (150 um Naßfilmstärke) auf Kontrastkarton aufgezogen. Die Beurteilung der Rheologie erfolgte visuell anhand der Stammpasten nach der Dispergierung sowie nach einer Standzeit von 1 bis 14 Tagen. In den nachfolgenden Herstellungs- und Anwendungsbeispielen beziehen sich Teile auf Gewichtsteile. VE-Wasser bedeutet "vollentsalztes Wasser".
1) In 1380 Teile VE-Wasser wurden 48,1 Teile Perylen-3,4,9,10-tetracarbonsäuredianhydrid als feuchter Preßkuchen eingetragen. Nach Abkühlen der Suspension auf 0°C wurden innerhalb von 10 Minuten 110,1 Teile einer 25,0 %igen wäßrigen Monomethylaminlösung zugetropft. Es wurde noch 15 Minuten bei 0 bis 5 °C nachgerührt und anschließend innerhalb von 15 Minuten bei 0 bis 5 °C eine Lösung von 28,5 Teilen wasserfreiem Galciumchlorid in 94,6 Teilen VE-Wasser zugegeben. Nach einer Stunde Nachruhren bei 0 bis 5 °C wurden 11,7 Teile des Produktes aus Beispiel Cd) in Form einer 46 %igen wäßrigen Lösung zugegeben und die Suspension auf 80°C erwärmt und 2 Stunden bei dieser Temperatur gehalten. Anschließend wurde auf 50°C abgekühlt und mit 26,5 Teilen konzentrierter Ameisensäure ein pH-Wert von 8 bis 8,5 eingestellt. Es wurde noch 30 Minuten bei ca. 50°C nachgerührt und danach die Pigmentzubereitung isoliert, salzfrei gewaschen und getrocknet. Man erhielt 52,4 Teile einer Zubereitung von C.I. Pigment Red 179.
2) In 1440 Teile VE-Wasser wurden 50 Teile Perylen-3,4,9,10-tetracarbonsäuredianhydrid als feuchter Preßkuchen eingetragen. Nach Abkühlen der Suspension auf 0°C wurden innerhalb von 10 Minuten 125,4 Teile einer 26,3 %igen wäßrigen Monomethylaminlösung zugetropft. Es wurde noch 15 Minuten bei 0 bis 5°C nachgerührt und anschließend innerhalb von 15 Minuten eine Lösung von 28,5 Teilen wasserfreiem Calciumchlorid in 94,6 Teilen VE-Wasser zugegeben. Nach einer Stunde Nachrühren bei 0 bis 5°C wurden 13,5 Teile des Produktes aus Beispiel Ae) in Form einer 20 %igen wäßrigen Lösung zugegeben und die Suspension auf 80°C erwärmt und 2 Stunden bei dieserTemperatur gehalten. Anschließend wurde auf 50 ° C abgekühlt und mit 38,6 Teilen konzentrierter Ameisensäure ein pH-Wert von 8 bis 8,5 eingestellt. Es wurde noch 30 Minuten bei 50 °C nachgerührt und danach die Pigmentzubereitung isoliert, salzfrei gewaschen und getrocknet. Man erhielt 54,7 Teile einer Zubereitung von C.I. Pigment Red 179.
3) In 1357 Teile VE-Wasser wurden 50 Teile Perylen-3,4,9,10-tetracarbonsäuredianhydrid als feuchter Preßkuchen eingetragen. Nach Abkühlen der Suspension auf 0°C wurden innerhalb von 10 Minuten 105 Teile einer 32 %igen Monomethylaminlösung zugetropft. Es wurde noch 15 Minuten bei 0 bis 5°C nachgerührt und anschließend eine Lösung von 28,5 Teilen wasserfreiem Calciumchlorid in 94,6 Teilen VE-Wasser zugegeben. Nach einer Stunde Nachrühren bei 0 bis 5°C wurden 10,0 Teile des Produktes aus Beispiel Dc) in Form einer 54 %igen wäßrigen Lösung zugegeben. Man erwärmte die Suspension auf 80 °C und hielt sie 2 Stunden bei dieser Temperatur. Anschließend wurde auf 50 °C abgekühlt und mit 29,9 Teilen konzentrierter Ameisensäure ein pH-Wert von 8 bis 8,5 eingestellt. Es wurde noch 30 Minuten bei 50°C nachgerührt und danach die Pigmentzubereitung isoliert, salzfrei gewaschen und getrocknet. Man erhielt 57,0 Teile einer Zubereitung von C.I. Pigment Red 179.
4) 40 Teile C.I. Pigment Violet 23, welches noch 20 % bei der Synthese anfallendes Salz enthielt, wurden in ein Rührgefäß eingetragen, in dem 60 Teile 100 %iges Isobutanol und 2,2 Teile 98 %ige Ameisensäure vorgelegt waren. Während 15 Stunden Rühren bei 20 bis 25°C wurden 80 Teile Isobutanol (100 %ig) und 240 Teile VE-Wasser zugetropft. Anschließend wurde das Isobutanol bis zu einer Destillationstemperatur von 100°C mit Wasserdampf azeotrop abdestilliert. Der Destillationsrückstand wurde abgesaugt und der Filterkuchen salzfrei gewaschen. Man erhielt 64,0 Teile Pigmentpreßkuchen, der mit 251,0 Teilen VE-Wasser und 96,0 Teilen Isobutanol sowie 12,0 Teilen des Produktes aus Beispiel Ae) in Form einer 20 %igen wäßrigen Lösung in einem Autoklaven angerührt wurde. Die Suspension wurde 3 Stunden auf 125°C erhitzt. Man ließ dann auf 80 ° C abkühlen und destillierte das Isobutanol bis zu einer Destillationstemperatur von 100°C mit Wasserdampf azeotrop ab. Der Destillationsrückstand wurde filtriert, der Filterkuchen mit Wasser gewaschen und bei 80 °C getrocknet. Man erhielt 31,3 Teile einer Zubereitung von C.I. Pigment Violet 23.
5) 40 Teile C.I. Pigment Violet 23, welches noch 20 % bei der Synthese anfallendes Salz enthielt, wurden in ein Rührgefäß eingetragen, in dem 60 Teile Isobutanol (100 %ig) und 2,7 g 85 %ige Ameisensäure vorgelegt waren. Während 15 Stunden Rühren bei 20 bis 25°C wurden 80 Teile Isobutanol (100 %ig) und 240 Teile VE-Wasser zugetropft. Anschließend wurde das Isobutanol mit Wasserdampf bis zu einer Destillationstemperatur von 100°C azeotrop abdestilliert. Der Destillationsrückstand wurde abgesaugt und der Filterkuchen salzfrei gewaschen. Man erhielt 64,3 Teile Pigmentpreßkuchen, der mit 250,7 Teilen VE-Wasser und 96,0 Teilen Isobutanol in einem Autoklaven angerührt wurde. Die Suspension wurde 3 Stunden auf 125°C erhitzt. Man ließ anschließend auf Raumtemperatur abkühlen und versetzte die Suspension mit 12,0 Teilen des Produktes aus Beispiel Ae) und rührte 15 Minuten nach. Dann destillierte man das Isobutanol bis zu einer Destillationstemperaturvon 100°C mit Wasserdampf azeotrop ab. Der Destillationsrückstand wurde filtriert, der Filterkuchen mit Wasser gewaschen und bei 80°C getrocknet. Man erhielt 30,0 Teile einer Zubereitung von C.I. Pigment Violet 23.
6) 44,0 Teile 2,9-Dimethylchinacridon (C.I. Pigment Red 122) wurden als feuchter Preßkuchen (Gehalt 31,4 %) in ein Rührgefäß eingetragen, in dem 270,0 Teile Isobutanol, 2,5 Teile Natriumhydroxid und 87,4 Teile VE-Wasser vorgelegt waren. Die Suspension wurde 15 Stunden bei einer Temperatur von 20 bis 30 ° C gerührt und anschließend 3 Stunden in einem Autoklaven auf 125°C erhitzt. Das Isobutanol wurde dann durch Wasserdampfdestillation entfernt und die wäßrige Suspension bei 50 ° C mit 11,0 Teilen des Produktes aus Beispiel Ff) in Form einer 10 %igen wäßrigen Lösung versetzt. Man rührte noch 3 Stunden bei 20 bis 25 °C. Anschließend wurde filtriert, der Filterkuchen mit Wasser gewaschen und bei 80 °C getrocknet. Man erhielt 44,0 Teile einer Zubereitung von C.I. Pigment Red 122.
7) 44,0 Teile 2,9-Dimethylchinacridon (C.I. Pigment Red 122) wurden als feuchter Preßkuchen (31,4 %ig) in ein Rührgefäß eingetragen, in dem 270,0 Teile Isobutanol, 2,5 Teile Natriumhydroxid und 87,4 Teile VE-Wasser vorgelegt waren. Die Suspension wurde 15 Stunden bei Raumtemperatur gerührt. Man gab 11,0 Teile des Produktes aus Beispiel Cd) in Form einer 10 %igen wäßrigen Lösung hinzu und erhitzte sie Suspension in einem Autoklaven 3 Stunden auf 125°C. Das Isobutanol wurde dann durch Wasserdampfdestillation entfernt. Man rührte noch 3 Stunden bei 20 bis 25 °C. Anschließend wurde filtriert, der Filterkuchen mit Wasser gewaschen und bei 80 °C getrocknet. Man erhielt 44,8 Teile einer Zubereitung von C.I. Pigment Red 122.
   I) 20,0 Teile Dimethylperylimid (C.I. Pigment Red 179), 44,0 Teile VE-Wasser und 36,0 Teile eines 26 %igen wäßrigen Polyacrylatharzes sowie 4,8 Teile einer 42 %igen wäßrigen Lösung gemäß Beispiel Ce) wurden 15 Minuten am Dissolver homogenisiert. Nach Zugabe von 660,0 Teilen Zirkondioxid-Perlen (Durchmesser 1,0 bis 1,6 mm) und weiteren 28,2 Teilen VE-Wasser wurde 90 Minuten in einer 0,5 I-Laborperlmühle dispergiert.
   11) 20,0 Teile Dimethylperylimid (C.I. Pigment Red 179), 44,0 Teile VE-Wasser und 36,0 Teile eines 27 %igen wäßrigen Polyacrylatharzes sowie 2,8 Teile einer 54 %igen wäßrigen Lösung gemäß Beispiel Dc) wurden 15 Minuten am Dissolver homogenisiert. Nach Zugabe von 660,0 Teilen Zirkondioxid-Perlen und weiteren 31,0 Teilen VE-Wasser wurde 90 Minuten, wie in I) beschrieben, dispergiert.
   111) 20,0 Teile der Pigmentzubereitung von C.I. Pigment Red 179 aus Beispiel 1), 44,0 Teile VE-Wasser und 36,0 Teile eines 27 %igen wäßrigen Polyacrylatharzes wurden 15 Minuten mittels eines Dissolvers homogenisiert. Man gab 660,0 Teile Glasperlen (Durchmesser 1,0 - 1,6 mm) und weitere 33,3 Teile VE-Wasser zu und dispergierte 90 Minuten in einer 0,5 I-Laborperlmühle. Man erhielt eine 15 %ige Pigmentpaste mit sehr guter Fließfähigkeit und Lagerstabilltät. Man verdünnte diese Paste mit einer wäßrigen Polyurethandispersion auf 5 % Pigmentgehalt und erzielte damit einen merklich farbstärkeren Überzug bei höherer Transparenz im Vergleich zu einer Pigmentzubereitung, welche analog Beispiel 1, jedoch unter Zugabe von 5,1 Teilen eines herkömmlichen Naphthalinsulfonsaure-Formaldehyd-Kondensationsproduktes anstelle der erfindungsgemäßen Verbindung aus Beispiel Cd) hergestellt worden war.
   IV) 6,0 Teile der Pigmentzubereitung von C.I. Pigment Red 179 aus Beispiel 2, 0,6 Teile eines handelsüblichen Entschäumers (50 %ig in Butylglycol) und 53,4 Teile eines 16 %igen wäßrigen Polyurethanharzes wurden 15 Minuten mittels eines Dissolvers homogenisiert. Man gab 300,0 Teile Zirkondioxid-Perlen (Durchmesser 1,0 - 1,6 mm) zu und dispergierte 1 Stunde auf einer Mini-Sandmühle (Teflonscheibe). Man erhielt eine 10 %ige Pigmentpaste mit sehr guter Fließfähigkeit und Lagerstabilität.
   Man verdünnte diese Paste mit 119,2 Teilen einer wäßrigen Polyurethandispersion sowie 20,8 Teilen VE-Wasser auf einen Pigmentgehalt von 3 % und erzielte damit gegenüber einem Pigment, welches analog Beispiel 1, jedoch ohne Zugabe der erfindungsgemäßen Verbindung aus Beispiel Cd) hergestellt worden war, einen merklich farbstärkeren Überzug bei höherer Transparenz.
   V) 6,0 Teile der Pigmentzubereitung von C.I. Pigment Red 179 aus Beispiel 2, 0,6 Teile eines handelsüblichen Entschäumers (50 %ig in Butylglycol) und 53,4 Teile einer 16,9 %igen wäßrigen Polyesterdispersion wurden 15 Minuten mittels eines Dissolvers homogenisiert. Man gab 300,0 Teile Zirkondioxid-Perlen (Durchmesser 1,0 - 1,6 mm) hinzu und dispergierte 1 Stunde auf einer Mini-Sandmühle (Teflonscheibe). Man erhielt eine 10 %ige Pigmentpaste mit sehr guter Fließfähigkeit. Man verdünnte diese Paste mit 131,3 Teilen der wäßrigen Polyesterdispersion sowie 8,7 Teilen VE-Wasser
   auf einen Pigmentgehalt von 3 % und erzielte damit einen im Vergleich zu einem nach EP-PS 0088392, Beispiel 5, (US-PS 4,496,731) hergestellten Pigment merklich farbstärkeren Überzug bei höherer Transparenz.

## Patentansprüche

1. Verbindung der Formel I 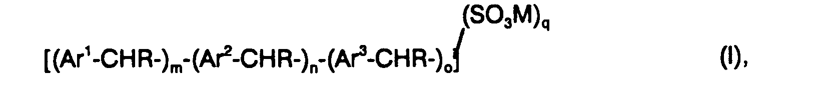
in der
Ar¹ für den Rest eines Alkylphenols mit 1 bis 12 Kohlenstoffatomen im Alkylrest, eines Bis- hydroryphenyl-C1-C4-alkans, eines Hydroxyphenylalkylketons mit 1 bis 5 Kohlenstoffatomen im Alkylrest, eines 2- bis 6-kernigen C₁-C₅-Alkylphenyl-novolaks, eines 2- bis 6-kernigen Styrolphenyl-novolaks, eines 2- bis 6-kernigen Methylstyrolphenyl-novolaks oder für eine Kombination daraus steht;
Ar² für den Rest eines Alkylnaphthols mit 1 bis 14 Kohlenstoffatomen im Alkylrest, eines 2- bis 3-kernigen Naphthol-alkanal-novolaks mit 1 bis 9 Kohlenstoffatomen im Alkanalrest oder für eine Kombination daraus steht;
Ar³ für den Rest eines Alkylnaphthalins mit 2 bis 3 Alkylresten, die jeweils 1 bis 9 Kohlenstoffatome enthalten, steht;
R für Wasserstoff oder für einen Alkylrest mit 1 bis 9 Kohlenstoffatomen steht;
m eine ganze Zahl von 1 bis 6 bedeutet;
n eine ganze Zahl von Null bis 4 bedeutet;
o eine ganze Zahl von 1 bis 4 bedeutet
mit der Maßgabe, daß die Verbindung der Formel I zwischen 20 Mol-% und 80 Mol-% der Komponente Ar¹ enthält;
q eine Zahl von 3 bis 14 bedeutet und
M für Wasserstoff oder für ein Kation steht.

2. Verbindung gemäß Anspruch 1, dadurch gekennzeichnet, daß die Verbindung der Formel I zwischen 33 Mol-% und 67 Mol-% der Komponente Ar¹ enthält.

3. Verbindung nach mindestens einem der Ansprüche 1 bis 2, dadurch gekennzeichnet, daß Ar¹ für den Rest eines Alkylphenols mit 1 bis 5 Kohlenstoffatomen im Alkylrest, vorzugsweise für den Rest eines Kresols, insbesondere p-Kresols, oder für den Rest eines 2- bis 6-kernigen Kresol-novolaks oder für eine Kombination daraus steht.

4. Verbindung nach mindestens einem der Ansprüche 1 bis 3, dadurch gekennzeichnet, daß Ar³ für den Rest eines Alkyl-ß-naphthols mit 8 bis 9 Kohlenstoffatomen im Alkylrest, für den Rest eines 2- bis 3- kernigen a-Naphtholalkanal-novolaks oder eines 2- bis 3-kernigen β-Naphthol-alkanal-novolaks mit jeweils 4 bis 9 Kohlenstoffatomen im Alkanalrest steht.

5. Verbindung nach mindestens einem der Ansprüche 1 bis 4, dadurch gekennzeichnet, daß Ar³ für den Rest eines Alkylnaphthalins mit 2 bis 3 Alkylresten, die jeweils 1 bis 4 Kohlenstoffatome enthalten, vorzugsweise für den Rest eines Dimethylnaphthalins, steht.

6. Verbindung nach mindestens einem der Ansprüche 1 bis 5, dadurch gekennzeichnet, daß
m eine ganze Zahl von 1 bis 4,
n eine ganze Zahl von Null bis 2, vorzugsweise die Zahl Null,
o eine ganze Zahl von 1 bis 3, vorzugsweise die Zahl 2, und
q eine Zahl von 4 bis 12, vorzugsweise 5 bis 10, bedeuten.

7. Verbindung nach mindestens einem der Ansprüche 1 bis 6, dadurch gekennzeichnet, daß R für Wasserstoff oder für einen Alkylrest mit 1 bis 4 Kohlenstoffatomen steht.

8. Verbindung nach mindestens einem der Ansprüche 1 bis 7, dadurch gekennzeichnet, daß M für ein Alkalimetall, vorzugsweise Natrium, für ein Äquivalent eines Erdalkalimetalls, für eine unsubstituierte Ammoniumgruppe, für eine Ammoniumgruppe, die durch 1 bis 4 C₁-C_{S}-Alkylreste, 1 bis 4 Hydroxy-C₁-C₅-alkylreste oder durch eine Kombination davon substituiert ist, oder für eine durch Anlagerung von 1 bis 150, vorzugsweise 5 bis 30, Ethylenoxid- oder Propylenoxid-Einheiten oder einer Kombination davon an Ammoniak oder an C₁-C₅-Alkylamine, C₂-C₅-Alkylendiamine, C₂-C₅-Alkylenpolyamine oder Amino-C₂-Ca-alkyl-imidazole entstandene Ammoniumgruppe steht.

9. Verfahren zur Herstellung einer Verbindung nach Anspruch 1, dadurch gekennzeichnet, daß man
a) die den Resten Ar^{l}, Ar² und Ar³ zugrundeliegenden aromatischen Verbindungen oder deren Gemische mit 0,5 bis 2 Mol, vorzugsweise 1,1 bis 1,4 Mol, Chlorsulfonsäure oder mit 0,5 bis 2 Mol, vorzugsweise 0,9 bis 1,2 Mol, konzentrierter Schwefelsäure pro Mol aromatischen Kerns bei einer Temperatur von 60 °C bis 180⁰ C umsetzt,
b) die dabei entstandenen Mischsulfonsäuren mit 0,4 bis 2 Mol, vorzugsweise 0,5 bis 1 Mol, mindestens eines Alkanals oder einer alkanalabgebenden Verbindung pro Mol Mischsulfonsäure zu einem sulfonsauren Mischkondensat der Formel I, wobei M Wasserstoff bedeutet, umsetzt und
c) gegebenenfalls das sulfonsaure Mischkondensat mit einer dem Kation M zugrundeliegenden Base neutralisiert.

10. Verwendung einer nach mindestens einem der Ansprüche 1 bis 8 definierten Verbindung als grenzflächenaktives Mittel.

11. Verwendung einer Verbindung nach mindestens einem der Ansprüche 1 bis 8, dadurch gekennzeichnet, daß sie als Dispergiermittel für die Herstellung von Farbmitteldispersionen, als Kupplungshilfsmittel für die Herstellung von Azofarbmitteln, als Färbereihilfs- und Stabilisierungsmittel für elektrolythaltige Färbeflotten sowie als Emulgiermittel für die Herstellung von Carrieremulsionen eingesetzt werden.

12. Verwendung einer Verbindung nach mindestens einem der Ansprüche 1 bis 8, dadurch gekennzeichnet, daß sie zur Herstellung von Zubereitungen anorganischer und organischer Pigmente, vorzugsweise polycyclischer Pigmente, insbesondere Perylenpigmente, eingesetzt wird.

13. Pigmentzubereitung, bestehend im wesentlichen aus
a) 99,5 bis 50 Gew.-%, vorzugsweise 97 bis 70 Gew.-%, mindestens eines organischen Pigments;
b) 0,5 bis 30 Gew.-%, vorzugsweise 1 bis 20 Gew.-%, bezogen auf das Gewicht des organischen Pigmentes, mindestens einer Verbindung gemäß Anspruch 1 und
c) 0 bis 20 Gew.-%, vorzugsweise 2 bis 10 Gew.-%, bezogen auf das Gewicht des organischen Pigments, an weiteren üblichen Zusatzstoffen.

14. Verfahren zur Herstellung einer Pigmentzubereitung gemäß Anspruch 13, dadurch gekennzeichnet, daß mindestens eine Verbindung gemäß Anspruch 1 in wäßriger Suspension oder in Wasser-Lösungsmittelgemischen auf die Pigmentteilchen aufgebracht wird.

15. Verwendung der Pigmentzuberertung nach Anspruch 13 für die Herstellung von wasserverdünnbaren Automobillacken.
